(19) Europäisches Patentamt
European Patent Office
Office européen des brevets

(11) **EP 3 601 678 B1**

(12) **FASCICULE DE BREVET EUROPEEN**

(45) Date de publication et mention de la délivrance du brevet:
**28.10.2020 Bulletin 2020/44**

(21) Numéro de dépôt: **18722109.8**

(22) Date de dépôt: **29.03.2018**

(51) Int Cl.:
***E02B 3/06*** (2006.01)

(86) Numéro de dépôt international:
**PCT/FR2018/050791**

(87) Numéro de publication internationale:
**WO 2018/178590 (04.10.2018 Gazette 2018/40)**

(54) **DISPOSITIF DE CONTRÔLE DE L'ÉNERGIE DES VAGUES**

VORRICHTUNG ZUR WELLENENERGIESTEUERUNG

WAVE ENERGY CONTROL DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.03.2017 FR 1752718**

(43) Date de publication de la demande:
**05.02.2020 Bulletin 2020/06**

(73) Titulaires:
• **Centre National de la Recherche Scientifique 75016 Paris (FR)**
• **Sorbonne Université 75006 Paris (FR)**

(72) Inventeurs:
• **EDDI, Antonin 75020 Paris (FR)**
• **DOMINO, Lucie 75014 Paris (FR)**
• **FERMIGIER, Marc 75014 Paris (FR)**

(74) Mandataire: **Novagraaf Technologies Bâtiment O2 2, rue Sarah Bernhardt CS90017 92665 Asnières-sur-Seine Cedex (FR)**

(56) Documents cités:
**US-A- 3 188 813**

## Description

### Domaine technique

La présente invention se rapporte à un système de contrôle de l'énergie d'ondes, aussi appelées vagues, se propageant à la surface d'un liquide ainsi qu'à l'utilisation d'un tel système.

### État de la technique

La problématique du contrôle de l'énergie des vagues notamment en milieu marin est étudiée depuis plusieurs années en particulier dans le cadre de la conversion de cette énergie en électricité.

Il existe actuellement des systèmes de contrôle de l'énergie des vagues connus de l'homme du métier, notamment par l'exemple qu'en donne les documents de l'état de la technique antérieure: US 2014/0260236 A1, US 4,255,066 A ou encore US 9,303,617 B2. Dans ceux-ci les technologies mises en œuvre utilisent les changements de bathymétrie (profondeur d'eau) pour contrôler les vagues et ces systèmes proposent de construire sous l'eau des structures fixes et rigides présentant un agencement particulier. US 3,188,813 A divulgue un système de contrôle des ondes hydro-élastiques à la surface d'un liquide avec les caractéristiques du préambule de la revendication 1.

Toutefois, ces systèmes sont rarement utilisés en pleine mer ou près des côtes car ils sont trop coûteux, difficiles à mettre en place, impossibles à déplacer ou à supprimer. De plus, ils ne sont utilisables qu'en zones peu profondes et s'avèrent être peu efficaces pour la récupération de l'énergie.

Il existe donc un réel besoin d'un système palliant ces défauts, inconvénients et obstacles de l'art antérieur, en particulier d'un système flexible et mobile permettant de maîtriser l'énergie des vagues quelle que soit la profondeur du liquide, de réduire les coûts de fabrication et d'installation, ainsi que d'améliorer la récupération de l'énergie des vagues pour pouvoir la convertir ensuite en électricité.

### Description de l'invention

Pour résoudre les inconvénients cités précédemment, l'invention a pour objet un système de contrôle des ondes hydro-élastiques à la surface d'un liquide comprenant une structure composite ayant au moins deux zones Z1 et Z2, de coefficients de flexion respectifs D1 et D2 définis par l'équation :

$$D_i = \frac{E_i \cdot e_i^3}{12 \cdot (1 - v_i^2)}$$

où $E_i$ est le module de Young de la zone Zi, $e_i$ est l'épaisseur de la zone Zi, et $v_i$ est le coefficient de Poisson de la zone Zi, i étant égale à 1 ou 2, et de tensions mécaniques internes respectivement $T_1$ et $T_2$ ;

la structure composite étant adaptée pour, quand le système de contrôle est posé à la surface du liquide de telle sorte qu'une onde hydro-élastique de surface se propage sur la première zone Z1 puis sur la seconde zone Z2 de la structure composite flottant sur la surface du liquide de densité p, et quand la longueur d'onde $\lambda_i$ de l'onde hydro-élastique respecte, dans la zone Zi, les équations suivantes :

$$\frac{2\pi}{\lambda_i} \geq \sqrt[4]{\frac{\rho.g}{D_i}} \qquad \text{et} \qquad \frac{2\pi}{\lambda_i} \geq \sqrt{\frac{T_i}{D_i}}$$

où g correspond à la constante universelle de gravitation et i correspond à l'indice de la zone Zi sur laquelle l'onde hydro-élastique se propage, contrôler le comportement de ladite onde hydro-élastique par ajustement desdits coefficients de flexion Di et / ou des formes desdites zones Zi.

De sorte à réaliser un système compact, les zones Z1 et Z2 peuvent être jointives.

Avantageusement, les coefficients de flexion D1 et D2 sont différents, par différences d'épaisseur $e_i$ des zones Z1 et Z2, et / ou par différence des modules d'Young $E_i$ et / ou des coefficients de Poisson $v_i$ des matériaux composant les zones Z1 et Z2.

Pour permettre un contrôle progressif des ondes, l'évolution du coefficient de flexion entre le passage de la zone Z1, de coefficient D1, à la zone Z2, de coefficient D2, peut être continue.

Avantageusement, il est possible de définir l'indice $n_i$ de la zone Zi comme étant proportionnel à l'inverse de la vitesse de propagation Vi des ondes hydro-élastiques dans la zone Zi, la vitesse de propagation Vi est définie par l'équation :

$$n_i \propto \frac{1}{V_i} = \sqrt{\frac{\rho \cdot \lambda_i^3}{D_i \cdot 8\pi^3}}$$

de sorte que l'indice $n_i$ est équivalent à l'indice de réfraction d'un milieu optique, et tel que les lois de l'optique géométrique s'appliquent à la propagation des ondes hydro-élastiques se propageant dans les zones Zi.

Selon ces lois, il est possible de réaliser une lentille, pour cela le système peut comprendre en outre une troisième zone Z3 et tel que :

- les zones Z1, Z2 et Z3 sont jointives ;
- les zones Z1 et Z3 sont de même indice $n_1$ différent de l'indice $n_2$ de la zone Z2, Z1 étant la zone d'arrivée des ondes hydro-élastiques et Z3 la zone de sortie ; et
- les formes des interfaces entre les zones sont des arcs de cercle de rayon R telles que l'ensemble {Z1, Z2, Z3} se comporte comme une lentille optique de focale f définie par l'équation :

$$f = \frac{1}{2} \cdot \frac{R}{\frac{n_2}{n_1}-1}.$$

La lentille ainsi formée par l'ensemble {Z1, Z2, Z3} peut être convergente si :

- l'ensemble a une forme de lentille biconvexe et $n_1 < n_2$ ; ou si
- l'ensemble a une forme de lentille biconcave et $n_1 > n_2$

Selon ces mêmes lois, il est possible de dévier une onde hydro-élastique pour protéger un dispositif comme le fait un réflecteur optique. Pour cela, le système de contrôle doit être tel que les zones Z1 et Z2 sont jointives, d'indices respectifs $n_1$ et $n_2$ respectant les équations suivantes :

$$n_2 < n_1 \quad \text{et} \quad arcsin\left(\frac{n_2}{n_1}\right) < 45°,$$

l'interface entre les zones étant un angle droit dont le sommet est dirigé du côté de la zone Z2 de sorte qu'une onde hydro-élastique arrivant sur la zone Z1 est réfléchie au contact de l'interface entre les zones Z1 et Z2 et repart selon un axe parallèle à sa direction d'incidence.

Avantageusement, au moins une des zones Zi est composée d'une matrice de plots flottants reliés par des moyens de liaison élastique de sorte que la matrice se comporte comme une zone effective Zeff_i de coefficient de flexion effectif $D_{eff\_i}$ défini par l'équation :

$$D_{eff\_i} = \frac{E_{eff\_i} \cdot e_{eff\_i}^3}{12 \cdot \left(1 - v_{eff\_i}^2\right)}$$

où $E_{eff\_i}$ est le module de Young effectif de la zone Zeff_i, $e_{eff\_i}$ est l'épaisseur effective de la zone effective Zeff_i, et $v_{eff\_i}$ est le coefficient de Poisson effectif de la zone Zeff_i, et de tension mécanique interne effective Teff_i, i étant égale à 1 ou 2;

la structure composite étant adaptée pour, quand le système de contrôle est posé à la surface du liquide de telle sorte qu'une onde hydro-élastique de surface se propage sur la première zone Z1 ou Zeff_1 puis sur la seconde zone Z2 ou Zeff_2 de la structure composite flottant sur la surface du liquide de densité p, et quand la longueur d'onde $\lambda_i$ de l'onde hydro-élastique se propageant dans la zone Zi, respectivement la longueur d'onde effective $\lambda_{eff\_i}$ de l'onde se propageant dans la zone effective Zeff_i, respecte les équations suivantes :

$$\frac{2\pi}{\lambda_i} \geq \sqrt[4]{\frac{\rho.g}{D_i}} \qquad \text{et} \qquad \frac{2\pi}{\lambda_i} \geq \sqrt{\frac{T_i}{D_i}}$$

respectivement

$$\frac{2\pi}{\lambda_{eff\_i}} \geq \sqrt[4]{\frac{\rho.g}{D_{eff\_i}}} \qquad \text{et} \qquad \frac{2\pi}{\lambda_{eff\_i}} \geq \sqrt{\frac{T_{eff\_i}}{D_{eff\_i}}}$$

où g correspond à la constante universelle de gravitation et i correspond à l'indice de la zone Zi ou Zeff_i sur laquelle l'onde hydro-élastique se propage, contrôler le comportement de ladite onde hydro-élastique par ajustement desdits coefficients de flexion $D_i$ ou $D_{eff\_i}$ et/ou des formes desdites zones Zi ou Zeff_i.

Dans un second aspect, l'invention porte sur l'utilisation d'un système de contrôle de type lentille, des ondes hydro-élastiques à la surface d'un liquide, tel que définie précédemment pour récupérer l'énergie des ondes se propageant à la surface d'un liquide telle que la structure composite du système de contrôle des ondes est adaptée pour focaliser les ondes hydro-élastiques en un point.

Selon un autre aspect, l'invention porte sur l'utilisation d'un système de contrôle des ondes à la surface d'un liquide, de type réflecteur, tel que définie précédemment pour protéger un dispositif possédant une partie en contact avec la surface du liquide, la structure composite du système de contrôle étant adaptée pour protéger la partie en contact avec la surface du liquide et réfléchir les ondes hydro-élastiques arrivant sur le dispositif.

## Brève description des figures

L'invention sera mieux comprise à la lecture de la description qui suit, faite uniquement à titre d'exemple, et en référence aux figures en annexe dans lesquelles :

- La figure 1 représente la courbe d'évolution de la relation de dispersion d'une onde gravito-capillaire ;
- La figure 2 représente la courbe d'évolution de la relation de dispersion d'une onde se propageant à la surface d'un liquide recouvert d'un film de matériau élastique ;
- Les figures 3a et 3b représentent respectivement une vue de profil et une vue du dessus d'une structure composite d'un système de contrôle des ondes hydro-élastiques selon un mode de réalisation général de l'invention ;
- La figure 4 représente une structure composite d'un système de contrôle des ondes hydro-élastiques selon une première variante du mode de réalisation général de l'invention ;
- La figure 5 représente le comportement d'une onde hydro-élastique se propageant sur la surface d'un liquide équipé d'un système de contrôle des ondes hydro-élastiques selon la première variante du mode de réalisation général de l'invention ;
- La figure 6 représente le comportement d'une onde hydro-élastique se propageant, selon un cas particulier, sur la surface d'un liquide équipé d'un système de contrôle des ondes hydro-élastiques selon la première variante du mode de réalisation général de l'invention.
- Les figure 7a et 7b représentent deux variantes d'une structure composite d'un système de contrôle des ondes hydro-élastiques selon une deuxième variante du mode de réalisation général de l'invention ; et
- La figure 8 représente une structure composite d'un système de contrôle des ondes hydro-élastiques selon une troisième variante du mode de réalisation général de l'invention.
- La figure 9 représente une zone effective d'un système de contrôle des ondes hydro-élastiques selon un mode de réalisation de l'invention.

## Modes de réalisation

Les ondes se propageant à la surface d'un liquide sont appelées des ondes gravito-capillaires. La fréquence $\omega$ de ces ondes est reliée à leur longueur d'onde $\lambda$ par la relation de dispersion gravito-capillaire suivante :

$$\omega^2 = gk + \frac{\sigma}{\rho} \cdot k^3 \qquad \text{(E1)}$$

où :

- g est la constante universelle de gravitation ;
- k est le nombre d'onde définit par :

$$k = \frac{2\pi}{\lambda} \qquad (E2)$$

- $\sigma$ est la tension superficielle du liquide ; et
- $\rho$ est la densité du liquide.

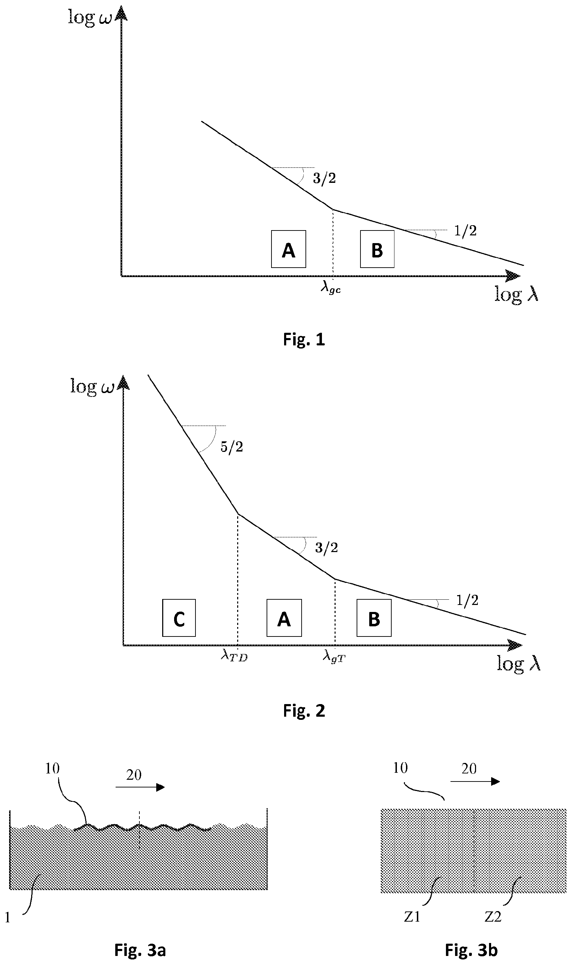

La **Figure 1** représente la courbe d'évolution de la relation de dispersion (E1) d'une onde gravito-capillaire fonction de la fréquence $\omega$ de l'onde gravito-capillaire et de sa longueur d'onde $\lambda$. Cette fonction comprend deux régimes :

A- le régime de capillarité (ou de tension) à faible longueur d'onde $\lambda$ ; et
B- le régime gravitationnel à forte longueur d'onde $\lambda$.

Dans le régime de capillarité (ou de tension), la force de rappel mécanique prédominante agissant sur les ondes est la tension superficielle du liquide alors que dans le régime gravitationnel, c'est la force de la gravité qui prédomine.

La longueur d'onde qui sépare ces deux régimes est appelée longueur gravito-capillaire $\lambda_{gc}$ et est égale à :

$$\lambda_{gc} = 2\pi \sqrt{\frac{\sigma}{\rho g}} \qquad (E3)$$

Lorsqu'un film de matériau élastique est déposé à la surface du liquide et qu'aucune autre force que celle exercée par le liquide sur le film n'est appliquée, la relation de dispersion de l'onde change et devient :

$$\omega^2 = \left( gk + \frac{T}{\rho} \cdot k^3 + \frac{D}{\rho} \cdot k^5 \right) \cdot \tanh kH \qquad (E4)$$

où :

- T est la tension mécanique interne du film de matériau élastique, qui dans ce cas-là est égale à la tension superficielle $\sigma$ du liquide ;
- D est le module de flexion du film appliqué sur le liquide ; et
- H est la hauteur de liquide présente sous le film.

Le module de flexion est quant à lui défini par l'équation E5 :

$$D = \frac{E \cdot e^3}{12 \cdot (1 - v^2)} \qquad (E5)$$

où :

- E est le module de Young du film ;
- e est l'épaisseur du film ; et
- v est le coefficient de Poisson du film.

La **Figure 2** représente la nouvelle courbe d'évolution de la relation de dispersion (E4) d'une onde se propageant dans un film de matériau élastique posé à la surface d'un liquide. On peut apercevoir sur celle-ci un troisième régime :
C- le régime de flexion ou celui des ondes hydro-élastiques dans lequel la force mécanique de rappel dominante est celle du film de matériau élastique.

Ainsi, les ondes hydro-élastiques sont les ondes dont la longueur d'onde $\lambda$ respecte les équations suivantes :

$$k = \frac{2\pi}{\lambda} \geq \sqrt[4]{\frac{\rho.g}{D}} \qquad (E6)$$

et

$$k = \frac{2\pi}{\lambda} \geq \sqrt{\frac{T}{D}} \qquad (E7)$$

Les **Figures 3a et 3b** représentent respectivement une vue de profil et une vue du dessus d'un système de contrôle des ondes hydro-élastiques à la surface d'un liquide 1 selon un premier mode de réalisation général de l'invention.

Celui-ci comprend une structure composite 10 comprenant deux zones Z1 et Z2, de coefficients de flexion respectifs D1 et D2 définis par l'équation E5bis :

$$D_i = \frac{E_i \cdot e_i^3}{12 \cdot \left(1 - v_i^2\right)} \qquad (E5bis)$$

où :

- Ei est le module de Young de la zone Zi,
- $e_i$ est l'épaisseur de la zone Zi, et
- $v_i$ est le coefficient de Poisson de la zone Zi

i étant égale à 1 ou 2, et de tensions mécaniques internes respectivement T1 et T2.

La structure composite 10 est adaptée pour, quand le système de contrôle est posé à la surface du liquide 1 de telle sorte qu'une onde hydro-élastique de surface se propage dans la direction 20, à savoir sur la première zone Z1 puis sur la seconde zone Z2 de la structure composite 10 flottant sur la surface du liquide 1 de densité p, et quand la longueur d'onde $\lambda_i$ de l'onde hydro-élastique respecte, dans la zone Zi, les équations E6bis et E7bis :

$$\frac{2\pi}{\lambda_i} \geq \sqrt[4]{\frac{\rho.g}{D_i}} \qquad (E6bis)$$

et

$$k_i = \frac{2\pi}{\lambda_i} \geq \sqrt{\frac{T_i}{D_i}} \qquad (E7bis)$$

où g correspond à la constante universelle de gravitation et i correspond à l'indice de la zone Zi sur laquelle l'onde hydro-élastique se propage, contrôler le comportement de l'onde hydro-élastique.

Dans ce régime de flexion, les ondes hydro-élastiques sont donc soumises à la force appliquée par la structure composite sur la surface du liquide, ce qui permet le contrôle de la propagation de ces ondes par le choix du matériau utilisé (donc des coefficients de Young $E_1$ et $E_2$ ainsi que des coefficients de Poissons $v_1$ et $v_2$) pour les zones Z1 et Z2, l'épaisseur $e_i$ de ces zones et/ou aussi la forme de ces zones.

De sorte à obtenir un système compact, mais aussi pour faciliter la fabrication de la structure composite 10, notamment dans le cas où les zones Z1 et Z2 seraient composées du même matériau, les zones Z1 et Z2 peuvent être jointives comme illustré dans la **Figure 3.**

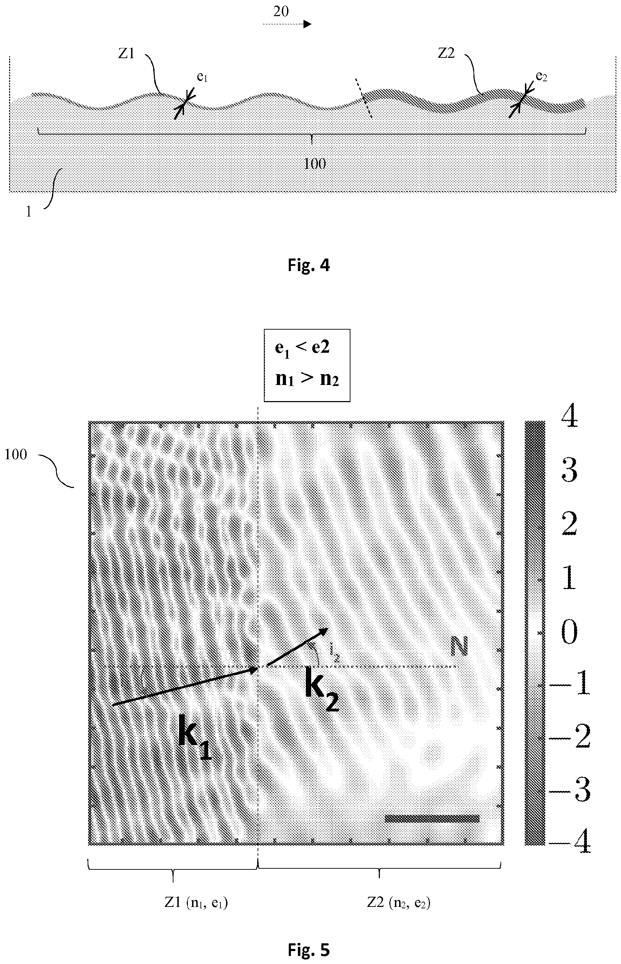

Avantageusement, les coefficients de flexion D1 et D2 sont différents, les zones Z1 et Z2 ayant des épaisseurs $e_i$ différentes, et / ou les zones Z1 et Z2 étant composées de matériaux ayant des modules d'Young $E_i$ et / ou de coefficients de Poisson $v_i$ différents. La **Figure 4** représente le cas d'une structure composite 100 composée de deux zones Z1 et Z2 d'épaisseur $e_i$ différentes selon un second mode de réalisation de l'invention.

Pour permettre un contrôle progressif des ondes hydro-élastiques et aussi pour faciliter la fabrication de la structure composite 10, l'évolution du coefficient de flexion entre le passage de la zone Z1, de coefficient D1, à la zone Z2, de coefficient Z2, peut se faire de manière continue, en faisant varier progressivement l'épaisseur du matériau utilisé pour réaliser les zones Z1 et Z2 par exemple.

Pour faire le parallèle avec le domaine de l'optique, il est possible de définir un indice $n_i$ de la zone Zi comme étant proportionnel à l'inverse de la vitesse de propagation Vi des ondes hydro-élastiques dans la zone Zi. La vitesse de propagation Vi est définie par l'équation E8 :

$$n_i \propto \frac{1}{V_i} = \sqrt{\frac{\rho \cdot \lambda_i^3}{D_i \cdot 8\pi^3}} \qquad\qquad (E8)$$

de sorte que l'indice $n_i$ est équivalent à l'indice de réfraction d'un milieu optique, et tel que les lois de l'optique géométrique s'appliquent à la propagation des ondes hydro-élastiques se propageant dans les zones Zi.

Ainsi, il est possible de définir des structures composites ayant le même comportement que des éléments optiques mais sur des ondes hydro-élastiques uniquement.

Selon le mode de réalisation représenté dans la **Figure 4,** les zones Z1 et Z2 sont constituées du même matériau, leur module d'Young $E_i$ et de coefficient de Poisson $v_i$ sont donc égaux, seule leur épaisseurs est différentes avec $e_1 < e_2$.

D'après la définition de l'indice $n_i$ comme étant proportionnel à l'inverse de la vitesse de propagation Vi des ondes hydro-élastiques dans la zone Zi, le rapport des indices entre les zones Z1 et Z2 peut s'exprimer ainsi :

$$\frac{n_1}{n_2} = \frac{V_2}{V_1} = \left(\frac{D_2}{D_1}\right)^{1/5} = \left(\frac{e_2}{e_1}\right)^{3/5} \qquad\qquad (E9)$$

Ainsi, si $e_1 < e_2$ alors $n_1 > n_2$. Selon les lois de l'optique géométrique, en particulier la loi de Snell-Descartes :

$$n_1 \sin i_1 = n_2 \sin i_2 \qquad\qquad (E10)$$

avec $i_1$ représentant l'angle incident du faisceau par rapport à la normale au dioptre formé par l'interface entre Z1 et Z2, et $i_2$ représentant l'angle de sortie du faisceau par la normale au dioptre, $n_1 > n_2$ équivaut à dire $i_2 > i_1$.

La **Figure 5** représente le comportement, vu du dessus, d'une onde hydro-élastique filmée en laboratoire et se propageant sur une structure composite 100 telle que définie précédemment. L'échelle de gris située sur le côté du graphique représente la hauteur de la vague / de l'onde par rapport à la position moyenne de la surface du liquide au repos qui se situe à 0.

Dans cette expérience, l'onde hydro-élastique incidente plane de direction $k_1$ se propage sur la zone Z1 puis sur la zone Z2. La direction $k_2$ de l'onde hydro-élastique dans cette zone Z2 s'écarte bien de la normale N à l'interface entre les zones Z1 et Z2, à savoir $i_2 > i_1$.

En suivant les lois de l'optique géométrique, une onde hydro-élastique incidente plane dont la direction $k_1$ faisant un angle $i_1$ supérieur à l'angle limite de réfraction $i_{lim}$ défini par :

$$i_{lim} = arcsin\left(\frac{n_2}{n_1}\right) \qquad\qquad (E11)$$

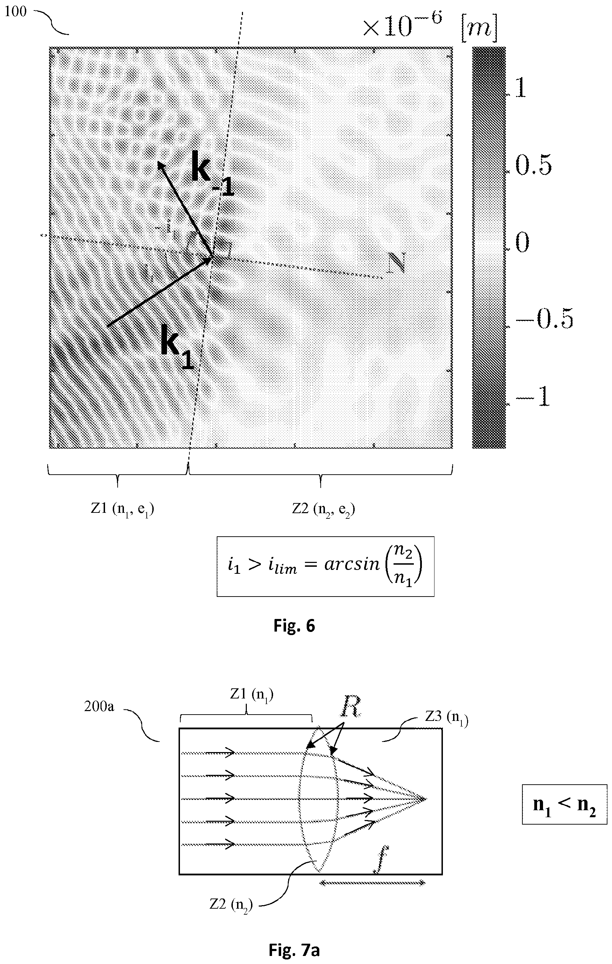

serait entièrement réfléchie à l'interface entre les zones Z1 et Z2, permettant par exemple la protection d'infrastructures situées en mer. La **Figure 6** illustre ce cas particulier.

Grâce à ces lois, il est aussi possible de réaliser une structure composite en forme de lentille convergente.

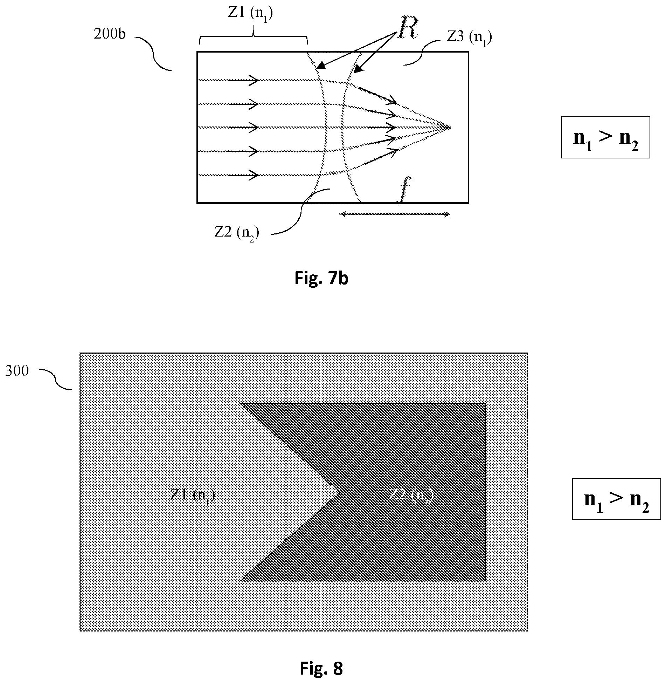

Les **Figures 7a et 7b** représentent deux modes de réalisation particuliers de l'invention permettant de réaliser une lentille convergente capable de focaliser l'énergie des ondes hydro-élastiques se propageant sur la structure composite en un point.

La structure composite 200a illustrée dans la **Figure 7a** est composée de trois zones Z1, Z2 et Z3 jointives. Les zones Z1 et Z3 sont de même indice $n_1$, tel que défini précédemment (i.e. $n_i$ est proportionnel à l'inverse de la vitesse de propagation Vi dans la zone Zi). L'indice $n_2$ de la zone Z2 est quant à lui différent de $n_1$, tel que $n_1 < n_2$.

La zone Z2 a la forme d'une lentille biconvexe de rayon de courbure R. C'est-à-dire que l'interface entre les zones Z1 et Z2 est un arc de cercle de rayon R dont la courbure est tournée du côté de la zone Z1, par laquelle arrivent les ondes, et l'interface en les zones Z2 et Z3 est aussi un arc de cercle de rayon R, dont la courbure est tournée du côté de la zone Z3, par laquelle sortent les ondes.

Ainsi une onde hydro-élastique plane qui se propage de la zone Z1 vers la zone Z2 puis Z3 de la structure composite 200a est focalisée dans le plan focal de la lentille ainsi réalisée.

La structure composite 200b illustrée dans la **Figure 7b** propose un autre mode de réalisation d'une lentille convergente. Dans cette configuration, la structure composite 200b est aussi composée de trois zones Z1, Z2 et Z3 jointives. Les zones Z1 et Z3 sont de même indice $n_1$, et la zone Z2 est d'indice $n_2$ tel que $n_1 > n_2$.

Dans cette configuration, la zone Z2 a la forme d'une lentille biconcave de rayon de courbure R. C'est-à-dire que l'interface entre les zones Z1 et Z2 est un arc de cercle de rayon R dont la courbure est tournée du côté de la zone Z2, et l'interface en les zones Z2 et Z3 est aussi un arc de cercle de rayon R, dont la courbure est aussi tournée du côté de la zone Z2.

De la même manière, une onde hydro-élastique plane qui se propage de la zone Z1 vers la zone Z2 puis Z3 de la structure composite 200b est focalisée dans le plan focal de la lentille ainsi réalisée.

La distance focale f de ces lentilles peut être définie comme suit :

$$f = \frac{R}{2\left(\frac{n_2}{n_1}-1\right)} \qquad (E12)$$

Un système de contrôle des ondes hydro-élastiques de surface comprenant une des structures composites 200a et 200b telles que définies précédemment peut donc être avantageusement utilisé pour récupérer l'énergie des ondes hydro-élastiques se propageant à la surface d'un liquide sur lequel sera installé la structure de contrôle, celui-ci étant adapté pour focaliser les ondes en un point, telle une lentille convergente.

Ainsi, une telle structure permettra d'augmenter la performance d'un dispositif placé au point de focalisation de la structure composite 200a ou 200b et capable de convertir l'énergie des ondes hydro-élastiques reçues en une puissance électrique par exemple, comme les dispositifs utilisés en mer qui permettent de transformer l'énergie des vagues en électricité.

Réciproquement, il est aussi possible de créer des lentilles divergentes. Pour cela, la forme des zones et des interfaces est la même que celle décrite précédemment à l'exception près que lorsque la zone Z2 a une forme biconvexe, l'indice $n_1$ doit être supérieur à $n_2$ et lorsque la zone Z2 a une forme biconcave, l'indice $n_1$ doit être inférieur à $n_2$.

La **Figure 8** représente un autre mode de réalisation particulier de l'invention. Dans celui-ci la structure composite 300 est assimilable à un réflecteur d'onde et utilise le principe de l'angle limite de réfraction $i_{lim}$ défini précédemment.

Dans cette configuration, la structure composite 300 est composée de deux zones Z1 et Z2 jointives, d'indices respectifs $n_1$ et $n_2$ respectant les équations E13 et E14 suivantes :
et

$$n_2 < n_1 \qquad (E13)$$

$$i_{lim} = arcsin\left(\frac{n_2}{n_1}\right) < 45° \qquad (E14)$$

L'interface entre les zones Z1 et Z2 est un angle droit dont le sommet est dirigé du côté de la zone Z2 de sorte qu'une onde hydro-élastique arrivant sur la zone Z1 est réfléchie, à deux reprises comme pour un faisceau lumineux, au contact de l'interface entre les zones Z1 et Z2 et repart selon un axe parallèle à sa direction d'incidence, comme c'est le cas pour un « coin de cube » ou réflecteur optique.

Un système de contrôle des ondes hydro-élastiques de surface comprenant une structure composite 300 telle que définie précédemment peut être avantageusement utilisée pour protéger un dispositif possédant une partie en contact avec la surface du liquide, comme une centrale nucléaire, la structure composite 300 étant adaptée pour protéger la partie en contact avec la surface du liquide et réfléchir les ondes hydro-élastiques arrivant sur le dispositif.

L'utilisation de ce genre de système en pleine mer ou sur une grande étendue de liquide pour être difficile et coûteuse à mettre en place si les zones Zi sont continues et réalisées dans un seul matériau, comme un film continu. Ainsi, selon une option compatible des modes de réalisation précédemment décrit, il peut être avantageux de réaliser des zones Zi composites ou zones effectives Zeff_i.

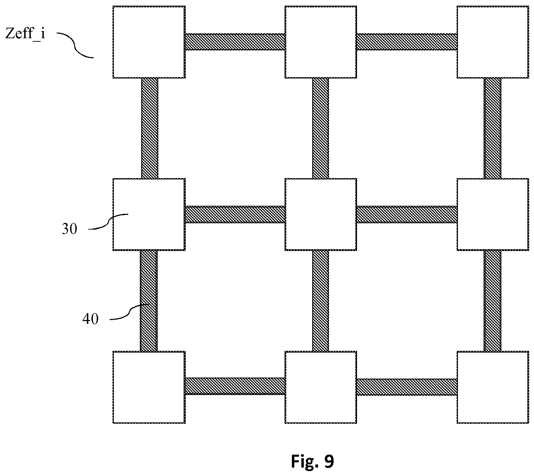

La **Figure 9** représente un mode de réalisation d'une telle zone effective Zeff_i.

Dans ce mode de réalisation, la zone Zeff_i est composée d'une matrice de plots flottants (30) reliés par des moyens de liaison élastique (40). Il est alors possible de définir le coefficient de flexion effectif de la zone effective Zeff_i par l'équation (E15) :

$$D_{eff\_i} = \frac{E_{eff\_i} \cdot e_{eff\_i}^3}{12 \cdot \left(1 - v_{eff\_i}^2\right)} \qquad (E15)$$

où $E_{eff\_i}$ est le module de Young effectif de la zone Zeff_i, $e_{eff\_i}$ est l'épaisseur effective de la zone effective Zeff_i, et $v_{eff\_i}$ est le coefficient de Poisson effectif de la zone Zeff_i, i étant égale à 1 ou 2, et de tensions mécaniques internes effectives respectivement Teff_1 et Teff_2.

La structure composite est alors adaptée pour, quand le système de contrôle est posé à la surface du liquide de telle sorte qu'une onde hydro-élastique de surface se propage sur la première zone Z1 ou Zeff_1 puis sur la seconde zone Z2 ou Zeff_2 de la structure composite flottant sur la surface du liquide de densité p, et quand la longueur d'onde $\lambda_i$ de l'onde hydro-élastique se propageant dans la zone Zi, respectivement la longueur d'onde effective $\lambda_{eff\_i}$ de l'onde se propageant dans la zone effective Zeff_i, respecte, les équations (E6bis) et (E7bis), respectivement les équations (E16) et (E17) suivantes :
et

$$\frac{2\pi}{\lambda_{eff\_i}} \geq \sqrt[4]{\frac{\rho.g}{D_{eff\_i}}} \qquad (E16)$$

$$\frac{2\pi}{\lambda_{eff\_i}} \geq \sqrt{\frac{T_{eff\_i}}{D_{eff\_i}}} \qquad (E17)$$

où g correspond à la constante universelle de gravitation et i correspond à l'indice de la zone Zi ou Zeff_i sur laquelle l'onde hydro-élastique se propage.

En définissant un indice effectif $n_{eff\_i}$ à partir de la vitesse effective Veff_i de propagation des ondes hydro-élastiques dans la zone effective Zeff_i, on peut ainsi créer, par ajustement des coefficients de flexion Di ou Deff_i et/ou des formes desdites zones Zi ou Zeff_i, des composants respectant les lois de l'optique géométrique tels qu'une lentille de Fresnel ou un coin de cube / réflecteur utilisables pour focaliser ou réfléchir les ondes hydro-élastiques sur une surface importante de liquide tout en diminuant la matière nécessaire à la fabrication d'un système de contrôle équivalent.

Avantageusement, les matériaux utilisés pour la réalisation des systèmes et dispositifs de contrôle précédemment décrits peuvent être des matériaux biodégradables de sorte à ne pas polluer le liquide sur lequel ils sont installés, et permettant aussi une utilisation sur une certaine durée sans nécessité le retrait physique de ces dernières et donc de supprimer les coûts de désinstallation.

L'invention a été illustrée et décrite en détail dans les dessins et la description précédente. Celle-ci doit être considérée comme illustrative et donnée à titre d'exemple et non comme limitant l'invention à cette seule description. De nombreuses variantes de réalisation sont possibles, à la condition qu'ils sont couvert par les revendications annexées.

## LISTE DES RÉFÉRENCES

1 Liquide
10 Système de contrôle des ondes hydro-élastiques de surface d'un liquide selon un premier mode de réalisation
20 Direction de propagation des ondes
30 Plot flottant
40 Moyens de liaison élastique
100 Structure composite
200a Structure composite de type lentille biconvexe
200b Structure composite de type lentille biconcave
300 Structure composite de type « coin de cube » / réflecteur

**Revendications**

1. Système de contrôle des ondes hydro-élastiques à la surface d'un liquide (1) comprenant une structure composite (10) ayant au moins deux zones Z1 et Z2, de coefficients de flexion respectifs D1 et D2, **caractérisé en ce que** les coefficients de flexion respectifs D1 et D2 sont définis par l'équation :

$$D_i = \frac{E_i \cdot e_i^3}{12 \cdot \left(1 - v_i^2\right)}$$

où $E_i$ est le module de Young de la zone Zi, $e_i$ est l'épaisseur de la zone Zi, et $v_i$ est le coefficient de Poisson de la zone Zi, i étant égale à 1 ou 2, et de tensions mécaniques internes respectivement $T_1$ et $T_2$ ;
la structure composite (10) étant adaptée pour, quand le système de contrôle est posé à la surface du liquide (1) de telle sorte qu'une onde hydro-élastique de surface se propage sur la première zone Z1 puis sur la seconde zone Z2 de la structure composite (10) flottant sur la surface du liquide (1) de densité $\rho$, et quand la longueur d'onde $\lambda_i$ de l'onde hydro-élastique respecte, dans la zone Zi, les équations suivantes :

$$\frac{2\pi}{\lambda_i} \geq \sqrt[4]{\frac{\rho.g}{D_i}} \qquad \text{et} \qquad \frac{2\pi}{\lambda_i} \geq \sqrt{\frac{T_i}{D_i}}$$

où g correspond à la constante universelle de gravitation et i correspond à l'indice de la zone Zi sur laquelle l'onde hydro-élastique se propage, contrôler le comportement de ladite onde hydro-élastique par ajustement desdits coefficients de flexion Di et / ou des formes desdites zones Zi.

2. Système selon la revendication 1 dans lequel les zones Z1 et Z2 sont jointives.

3. Système selon l'une des revendications 1 à 2 **caractérisé en ce que** les coefficients de flexion D1 et D2 sont différents, par différences d'épaisseur $e_i$ des zones Z1 et Z2, et / ou par différences des modules d'Young $E_i$ et / ou des coefficients de Poisson $v_i$ des matériaux composant les zones Z1 et Z2.

4. Système selon 1 la revendication 3 dans lequel l'évolution du coefficient de flexion entre le passage de la zone Z1, de coefficient D1, à la zone Z2, de coefficient D2, est continue.

5. Système selon l'une des revendications 1 à 4 dans lequel ayant défini l'indice $n_i$ de la zone Zi comme étant proportionnel à l'inverse de la vitesse de propagation $V_i$ des ondes hydro-élastiques dans la zone Zi, la vitesse de propagation $V_i$ est définie par l'équation :

$$n_i \propto \frac{1}{V_i} = \sqrt{\frac{\rho \cdot \lambda_i^3}{D_i \cdot 8\pi^3}}$$

de sorte que l'indice $n_i$ est équivalent à l'indice de réfraction d'un milieu optique, et tel que les lois de l'optique géométrique s'appliquent à la propagation des ondes hydro-élastiques se propageant dans les zones Zi.

6. Système selon la revendication 5 comprenant en outre une troisième zone Z3 et tel que :

- les zones Z1, Z2 et Z3 sont jointives ;
- les zones Z1 et Z3 sont de même indice $n_1$ différent de l'indice $n_2$ de la zone Z2, Z1 étant la zone d'arrivée des ondes hydro-élastiques et Z3 la zone de sortie ; et
- les formes des interfaces entre les zones sont des arcs de cercle de rayon R telles que l'ensemble {Z1, Z2, Z3} se comporte comme une lentille optique de focale f définie par l'équation :

$$f = \frac{1}{2} \cdot \frac{R}{\frac{n_2}{n_1} - 1}.$$

**7.** Système selon la revendication 6 dans lequel la lentille formée par l'ensemble {Z1, Z2, Z3} est convergente si :

- l'ensemble a une forme de lentille biconvexe et $n_1 < n_2$ ; ou si
- l'ensemble a une forme de lentille biconcave et $n_1 > n_2$.

**8.** Système selon la revendication 5 dans lequel les zones Z1 et Z2 sont jointives, d'indices respectifs $n_1$ et $n_2$ respectant les équations :

$$n_2 \ < \ n_1 \quad \text{et} \quad arcsin\left(\frac{n_2}{n_1}\right) < 45° \ ,$$

l'interface entre les zones est un angle droit dont le sommet est dirigé du côté de la zone Z2 de sorte qu'une onde hydro-élastique arrivant sur la zone Z1 est réfléchie au contact de l'interface entre les zones Z1 et Z2 et repart selon un axe parallèle à sa direction d'incidence.

**9.** Système selon l'une des revendications 1 à 8 dans lequel au moins une des zones Zi est composée d'une matrice de plots flottants (30) reliés par des moyens de liaison élastique (40) de sorte que la matrice se comporte comme une zone effective Zeff_i de coefficient de flexion effectif $D_{eff\_i}$ défini par l'équation :

$$D_{eff\_i} = \frac{E_{eff\_i} \cdot e_{eff\_i}^3}{12 \cdot \left(1 - v_{eff\_i}^2\right)}$$

où $E_{eff\_i}$ est le module de Young effectif de la zone Zeff_i, $e_{eff\_i}$ est l'épaisseur effective de la zone effective Zeff_i, et $v_{eff\_i}$ est le coefficient de Poisson effectif de la zone Zeff_i, et de tension mécanique interne effective Teff_i, i étant égale à 1 ou 2;
la structure composite étant adaptée pour, quand le système de contrôle est posé à la surface du liquide (1) de telle sorte qu'une onde hydro-élastique de surface se propage sur la première zone Z1 ou Zeff_1 puis sur la seconde zone Z2 ou Zeff_2 de la structure composite flottant sur la surface du liquide (1) de densité p, et quand la longueur d'onde $\lambda_i$ de l'onde hydro-élastique se propageant dans la zone Zi, respectivement la longueur d'onde effective $\lambda_{eff\_i}$ de l'onde se propageant dans la zone effective Zeff_i, respecte les équations suivantes :

$$\frac{2\pi}{\lambda_i} \geq \sqrt[4]{\frac{\rho.g}{D_i}} \qquad \text{et} \qquad \frac{2\pi}{\lambda_i} \geq \sqrt{\frac{T_i}{D_i}}$$

respectivement

$$\frac{2\pi}{\lambda_{eff\_i}} \geq \sqrt[4]{\frac{\rho.g}{D_{eff\_i}}} \qquad \text{et} \qquad \frac{2\pi}{\lambda_{eff\_i}} \geq \sqrt{\frac{T_{eff\_i}}{D_{eff\_i}}}$$

où g correspond à la constante universelle de gravitation et i correspond à l'indice de la zone Zi ou Zeff_i sur laquelle l'onde hydro-élastique se propage, contrôler le comportement de ladite onde hydro-élastique par ajustement desdits coefficients de flexion $D_i$ ou $D_{eff\_i}$ et/ou des formes desdites zones Zi ou Zeff_i.

**10.** Utilisation d'un système de contrôle des ondes hydro-élastiques de surface selon la revendication 7 pour récupérer l'énergie des ondes se propageant à la surface d'un liquide telle que la structure composite (200a ou 200b) du système de contrôle des ondes est adaptée pour focaliser les ondes hydro-élastiques en un point.

**11.** Utilisation d'un système de contrôle des ondes hydro-élastiques de surface selon la revendication 8 pour protéger un dispositif possédant une partie en contact avec la surface du liquide, la structure composite (300) du système étant adaptée pour protéger la partie en contact avec la surface du liquide et réfléchir les ondes hydro-élastiques arrivant sur le dispositif.

**Patentansprüche**

1. System zur Steuerung der hydroelastischen Wellen an der Oberfläche einer Flüssigkeit (1), das eine Verbundstruktur (10) umfasst, die mindestens zwei Zonen Z1 und Z2 mit jeweiligen Biegekoeffizienten D1 und D2, **dadurch gekennzeichnet, dass** die jeweiligen Biegekoeffizienten D1 und D2 definiert sind durch die Gleichung:

$$D_i = \frac{E_i \cdot e_i^3}{12 \cdot \left(1 - v_i^2\right)}$$

wobei $E_i$ der Elastizitätsmodul der Zone Zi ist, $e_i$ die Dicke der Zone Zi ist, und vi der Poisson-Koeffizient der Zone Zi ist, wobei i gleich 1 oder 2 ist, und mit inneren mechanischen Spannungen $T_1$ beziehungsweise $T_2$ aufweist; wobei die Verbundstruktur (10) dafür geeignet ist, wenn das Steuerungssystem so auf der Oberfläche der Flüssigkeit (1) liegt, dass sich eine hydroelastische Oberflächenwelle an der ersten Zone Z1 und anschließend an der zweiten Zone Z2 der auf der Oberfläche der Flüssigkeit (1) mit einer Dichte $\rho$ schwimmenden Verbundstruktur (10) ausbreitet, und wenn die Wellenlänge $\lambda_i$ der hydroelastischen Welle in der Zone Zi die folgenden Gleichungen erfüllt:

$$\frac{2\pi}{\lambda_i} \geq \sqrt[4]{\frac{\rho \cdot g}{D_i}} \qquad \text{und} \qquad \frac{2\pi}{\lambda_i} \geq \sqrt{\frac{T_i}{D_i}}$$

wobei g der universellen Gravitationskonstante entspricht, und i dem Index der Zone Zi entspricht, an der sich die hydroelastische Welle ausbreitet, das Verhalten der hydroelastischen Welle durch Anpassen der Biegekoeffizienten Di und/oder der Formen der Zonen Zi zu steuern.

2. System nach Anspruch 1, wobei die Zonen Z1 und Z2 aneinandergrenzen.

3. System nach einem der Ansprüche 1 bis 2, **dadurch gekennzeichnet, dass** sich die Biegekoeffizienten D1 und D2 durch Unterschiede der Dicke ei der Zonen Z1 und Z2, und/oder durch Unterschiede der Elastizitätsmodule $E_i$ und/oder der Poisson-Koeffizienten vi der Materialien, aus denen die Zonen Z1 und Z2 bestehen, unterscheiden.

4. System nach Anspruch 3, wobei die Entwicklung des Biegekoeffizienten zwischen dem Durchlauf von der Zone Z1 mit dem Koeffizienten D1 bis zur Zone Z2 mit dem Koeffizienten D2 kontinuierlich ist.

5. System nach einem der Ansprüche 1 bis 4, wobei, nachdem der Index $n_i$ der Zone Zi als zur Inversen der Ausbreitungsgeschwindigkeit Vi der hydroelastischen Wellen in der Zone Zi proportional definiert wurde, die Ausbreitungsgeschwindigkeit Vi definiert ist durch die Gleichung:

$$n_i \propto \frac{1}{V_i} = \sqrt{\frac{\rho \cdot \lambda_i^3}{D_i \cdot 8\pi^3}}$$

sodass der Index $n_i$ dem Brechungsindex eines optischen Mediums äquivalent ist, und sodass die Gesetze der geometrischen Optik für die Ausbreitung der sich in den Zonen Zi ausbreitenden hydroelastischen Wellen gelten.

6. System nach Anspruch 5, das weiter eine dritte Zone Z3 umfasst, und so, dass:

   - die Zonen Z1, Z2 und Z3 aneinandergrenzen;
   - die Zonen Z1 und Z3 den gleichen Index $n_1$ besitzen, der sich vom Index $n_2$ der Zone Z2 unterscheidet, wobei Z1 die Eintrittszone der hydroelastischen Wellen ist, und Z3 die Austrittszone; und
   - die Formen der Grenzflächen zwischen den Zonen Kreisbögen mit einem Radius R sind, sodass sich die Menge {Z1, Z2, Z3} wie eine optische Linse mit einer Brennweite f verhält, die durch die Gleichung:

$$f = \frac{1}{2} \cdot \frac{R}{\frac{n_2}{n_1} - 1}.$$

definiert ist.

7. System nach Anspruch 6, wobei die von der Menge {Z1, Z2, Z3} gebildete Linse konvergierend ist, wenn:

- die Menge eine Form einer bikonvexen Linse aufweist und $n_1<n_2$; oder wenn
- die Menge eine Form einer bikonkaven Linse aufweist und $n_1>n_2$.

8. System nach Anspruch 5, wobei die Zonen Z1 und Z2 mit jeweiligen Indizes $n_1$ und $n_2$, die die Gleichungen:

$$n_2 < n_1 \quad \text{und} \quad arcsin\left(\frac{n_2}{n_1}\right) < 45°,$$

erfüllen, aneinandergrenzen,
die Grenzfläche zwischen den Zonen ein rechter Winkel ist, dessen Spitze zur Seite der Zone Z2 gerichtet ist, sodass eine hydroelastische Welle, die an der Zone Z1 eintritt, bei Berührung der Grenzfläche zwischen den Zonen Z1 und Z2 zurückgeworfen wird und entlang einer zu ihrer Einfallsrichtung parallel Achse zurückläuft.

9. System nach einem der Ansprüche 1 bis 8, wobei mindestens eine der Zonen Zi aus einer Anordnung von Schwimmklötzen (30) besteht, die über elastische Verbindungsmittel (40) verbunden sind, sodass sich die Anordnung wie eine effektive Zone Zeff_i mit einem effektiven Biegekoeffizienten $D_{eff\_i}$, definiert durch die Gleichung:

$$D_{eff\_i} = \frac{E_{eff\_i} \cdot e_{eff\_i}^3}{12 \cdot \left(1 - v_{eff\_i}^2\right)}$$

wobei $E_{eff\_i}$ der effektive Elastizitätsmodul der Zone Zeff_i ist, $e_{eff\_i}$ die effektive Dicke der effektiven Zone Zeff_i ist, und $v_{eff\_i}$ der effektive Poisson-Koeffizient der Zone Zeff_i ist, und mit einer effektiven inneren mechanischen Spannung $\overline{T}eff\_i$ verhält, wobei i gleich 1 oder 2 ist;
wobei die Verbundstruktur dafür geeignet ist, wenn das Steuerungssystem so auf der Oberfläche der Flüssigkeit (1) liegt, dass sich eine hydroelastische Oberflächenwellen an der ersten Zone Z1 oder Zeff_1 und anschließend an der zweiten Zone Z2 oder Zeff_2 der auf der Oberfläche der Flüssigkeit (1) mit einer Dichte $\rho$ schwimmenden Verbundstruktur ausbreitet, und wenn die Wellenlänge $\lambda_i$ der sich in der Zone Zi ausbreitenden hydroelastischen Welle, beziehungsweise die effektive Wellenlänge $\lambda_{eff\_i}$ der sich in der effektiven Zone Zeff_i ausbreitenden Welle die folgenden Gleichungen erfüllt:

$$\frac{2\pi}{\lambda_i} \geq \sqrt[4]{\frac{\rho.g}{D_i}} \qquad \text{und} \qquad \frac{2\pi}{\lambda_i} \geq \sqrt{\frac{T_i}{D_i}}$$

beziehungsweise

$$\frac{2\pi}{\lambda_{eff\_i}} \geq \sqrt[4]{\frac{\rho.g}{D_{eff\_i}}} \qquad \text{und} \qquad \frac{2\pi}{\lambda_{eff\_i}} \geq \sqrt{\frac{T_{eff\_i}}{D_{eff\_i}}}$$

wobei g der universellen Gravitationskonstante entspricht, und i dem Index der Zone Zi oder Zeff_i entspricht, an der sich die hydroelastische Welle ausbreitet, das Verhalten der hydroelastischen Welle durch Anpassen der Biegekoeffizienten $D_i$ oder $D_{eff\_i}$ und/oder der Formen der Zonen Zi oder Zeff_i zu steuern.

10. Verwendung eines Systems zur Steuerung der hydroelastischen Oberflächenwellen nach Anspruch 7, um die Energie der sich an der Oberfläche einer Flüssigkeit ausbreitenden Wellen so einzufangen, dass die Verbundstruktur (200a oder 200b) des Systems zur Steuerung der Wellen dafür geeignet ist, die hydroelastischen Wellen an einem Punkt zu konzentrieren.

11. Verwendung eines Systems zur Steuerung der hydroelastischen Oberflächenwellen nach Anspruch 8, um eine Vorrichtung zu schützen, die einen Teil besitzt, der sich mit der Oberfläche der Flüssigkeit in Berührung befindet, wobei die Verbundstruktur (300) des Systems dafür geeignet ist, den Teil zu schützen, der sich mit der Oberfläche der Flüssigkeit in Berührung befindet, und die an der Vorrichtung eintreffenden hydroelastischen Wellen zurückzuwerfen.

**Claims**

1. A system for controlling hydroelastic waves on the surface of a liquid (1) comprising a composite structure (10) having at least two zones Z1 and Z2, of respective bending coefficients D1 and D2 wherein the respective bending coefficients D1 and D2 are defined by the equation:

$$D_i = \frac{E_i \cdot e_i^3}{12 \cdot \left(1 - v_i^2\right)}$$

where $E_i$ is the Young's modulus of the zone Zi, $e_i$ is the thickness of the zone Zi, and $v_i$ is the Poisson's ratio of the zone Zi, i being equal to 1 or 2, and of internal mechanical tensions $T_1$ and $T_2$, respectively;
the composite structure (10) being adapted to, when the controlling system is placed on the surface of the liquid (1) such that a hydroelastic surface wave propagates through the first zone Z1 then through the second zone Z2 of the composite structure (10) floating on the surface of the liquid (1) of density p, and when the wavelength $\lambda_i$ of the hydroelastic wave respects, in the zone Zi, the following equations:

$$\frac{2\pi}{\lambda_i} \geq \sqrt[4]{\frac{\rho \cdot g}{D_i}} \qquad \text{and} \qquad \frac{2\pi}{\lambda_i} \geq \sqrt{\frac{T_i}{D_i}}$$

where g is the universal gravitational constant and i corresponds to the index of the zone Zi through which the hydroelastic wave is propagating, control the behavior of said hydroelastic wave via adjustment of said bending coefficients Di and/or of the shapes of said zones Zi.

2. The system as claimed in claim 1, wherein the zones Z1 and Z2 are contiguous.

3. The system as claimed in one of claims 1 to 2, **characterized in that** the bending coefficients D1 and D2 are different because of differences between thicknesses $e_i$, and/or because of differences between the Young's moduli $E_i$ and/or different Poisson's ratios $v_i$ of the materials from which the zones Z1 and Z2 are made.

4. The system as claimed in claim 3, wherein the variation in the bending coefficient between the passage from the zone Z1, of coefficient D1, to the zone Z2, of coefficient D2, is continuous.

5. The system as claimed in one of claims 1 to 4, wherein, having defined the index $n_i$ of the zone Zi as being proportional to the inverse of the propagation speed $V_i$ of the hydroelastic waves in the zone Zi, the propagation speed $V_i$ is defined by the equation:

$$n_i \propto \frac{1}{V_i} = \sqrt{\frac{\rho \cdot \lambda_i^3}{D_i \cdot 8\pi^3}}$$

so that the index $n_i$ is equivalent to the refractive index of an optical medium, and such that the laws of geometric optics apply to the propagation of the hydroelastic waves propagating through the zones Zi.wherein

6. The system as claimed in claim 5, furthermore comprising a third zone Z3 and such that:

   - the zones Z1, Z2 and Z3 are contiguous;
   - the zones Z1 and Z3 are of same index $n_1$ different from the index $n_2$ of the zone Z2, Z1 being the arrival zone of the hydroelastic waves and Z3 the exit zone; and
   - the shapes of the interfaces between the zones are circular arcs of radius R such that the set {Z1, Z2, Z3} behaves as an optical lens of focal length f defined by the equation:

$$f = \frac{1}{2} \cdot \frac{R}{\frac{n_2}{n_1} - 1}.$$

7. The system as claimed in claim 6, wherein the lens formed by the set {Z1, Z2, Z3} is convergent if:

   - the set has a biconvex-lens shape and $n_1 < n_2$; or if
   - the set has a biconcave-lens shape and $n_1 > n_2$.

8. The system as claimed in claim 5, wherein the zones Z1 and Z2 are contiguous, and of respective indices $n_1$ and $n_2$ respecting the equations:

$$n_2 < n_1 \quad \text{and} \quad arcsin\left(\frac{n_2}{n_1}\right) < 45°,$$

the interface between the zones being a right angle the vertex of which is directed toward the side of the zone Z2 so that a hydroelastic wave arriving from the zone Z1 is reflected on contact with the interface between the zones Z1 and Z2 and leaves along an axis parallel to its direction of incidence.

9. The system as claimed in one of claims 1 to 8, wherein at least one of the zones Zi is composed of a matrix of floating pads (30) that are connected by elastic linking means (40) so that the matrix behaves as an effective zone Zeff_i of effective bending coefficient $D_{eff\_i}$ defined by the equation:

$$D_{eff\_i} = \frac{E_{eff\_i} \cdot e_{eff\_i}^3}{12 \cdot \left(1 - v_{eff\_i}^2\right)}$$

where $E_{eff\_i}$ is the effective Young's modulus of the zone Zeff_i, $e_{eff\_i}$ is the effective thickness of the effective zone Zeff_i, and $v_{eff\_i}$ is the effective Poisson's ratio of the zone Zeff_i, and of effective internal mechanical tension Teff_i, i being equal to 1 or 2;
the composite structure being adapted to, when the controlling system is placed on the surface of the liquid (1) such that a hydroelastic surface wave propagates through the first zone Z1 or Zeff_1 then through the second zone Z2 or Zeff_2 of the composite structure floating on the surface of the liquid (1) of density p, and when the wavelength $\lambda_i$ of the hydroelastic wave propagating through the zone Zi, respects the following equations:

$$\frac{2\pi}{\lambda_i} \geq \sqrt[4]{\frac{\rho.g}{D_i}} \quad \text{and} \quad \frac{2\pi}{\lambda_i} \geq \sqrt{\frac{T_i}{D_i}}$$

and the effective wavelength $\lambda_{eff\_i}$ of the wave propagating through the effective zone Zeff_i respects the following equations:

$$\frac{2\pi}{\lambda_{eff\_i}} \geq \sqrt[4]{\frac{\rho.g}{D_{eff\_i}}} \quad \text{and} \quad \frac{2\pi}{\lambda_{eff\_i}} \geq \sqrt{\frac{T_{eff\_i}}{D_{eff\_i}}}$$

where g is the universal gravitational constant and i corresponds to the index of the zone Zi or Zeff_i through which the hydroelastic wave is propagating, control the behavior of said hydroelastic wave via adjustment of said bending coefficients Di or $D_{eff\_i}$ and/or of the shapes of said zones Zi or Zeff_i.

10. The use of a system for controlling hydroelastic surface waves as claimed in claim 7 to harvest the energy of waves propagating on the surface of a liquid such that the composite structure (200a or 200b) of the system for controlling the waves is adapted to focus the hydroelastic waves on a point.

11. The use of a system for controlling hydroelastic surface waves as claimed in claim 8 to protect a device possessing a portion in contact with the surface of the liquid, the composite structure (300) of the system being adapted to protect the portion in contact with the surface of the liquid and reflecting the hydroelastic waves that would otherwise reach the device.

$\log \omega$

3/2

A    B

1/2

$\lambda_{gc}$    $\log \lambda$

**Fig. 1**

$\log \omega$

5/2

3/2

C    A    B

1/2

$\lambda_{TD}$    $\lambda_{gT}$    $\log \lambda$

**Fig. 2**

10    20

1

**Fig. 3a**

10    20

Z1    Z2

**Fig. 3b**

**Fig. 4**

$$e_1 < e2$$
$$n_1 > n_2$$

Z1 (n₁, e₁)  Z2 (n₂, e₂)

**Fig. 5**

$$i_1 > i_{lim} = arcsin\left(\frac{n_2}{n_1}\right)$$

**Fig. 6**

$$n_1 < n_2$$

**Fig. 7a**

Z1 (n₁)

R

Z3 (n₁)

200b

Z2 (n₂)

f

n₁ > n₂

**Fig. 7b**

300

Z1 (n₁)

Z2 (n₂)

n₁ > n₂

**Fig. 8**

Zeff_i

30

40

**Fig. 9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20140260236 A1
- US 4255066 A
- US 9303617 B2
- US 3188813 A